# EUROPEAN PATENT APPLICATION

(11) **EP 1 768 122 A1**
(43) Date of publication of application: **28.03.2007**
(21) Application number: 05740971.6
(22) Date of filing: 16.05.2005
(51) Int. Cl.: G11B 20/10, G11B 27/00, G11B 27/34, H04N 5/85, H04N 5/93

(54) **CONTENT REPRODUCING DEVICE, CONTENT REPRODUCING METHOD, CONTENT REPRODUCING SYSTEM, AND ITS COMPUTER PROGRAM**

(30) Priority: 25.05.2004 JP 2004154256
(71) Applicant: SONY CORPORATION, Tokyo 141-0001 (JP)
(72) Inventor: YAMADA, Makoto, Minato-ku, Tokyo (JP); SATO, Takayuki, Minato-ku, Tokyo (JP); OBATA, Hideo, Minato-ku, Tokyo (JP); TADOKORO, Eiji, Minato-ku, Tokyo (JP); NAGAO, Yoshito, Minato-ku, Tokyo (JP); SHIMONO, Hiroshi, Minato-ku, Tokyo (JP)
(74) Representative: Mills, Julia
(86) International application number: PCT/JP2005/009290
(87) International publication number: WO 2005/117011

(57) **Abstract**

Disclosed is a content reproduction apparatus that is capable of reducing the processing time required between when the viewer's intention to start reproduction is indicated and when a reproduction image is actually displayed, and obliterates the reproduction start time difference between pieces of content. The content reproduction apparatus includes: selection screen display means (110) for displaying a selection screen; preread instruction generation means (112) for detecting a user's selection operation from the selection screen, estimating the selection of a specific piece of content, and generating a read instruction; content storage means (114) for reading the specific piece of content from a recording medium in compliance with the read instruction and storing the read content; content determination means (116) for determining the content to be reproduced in accordance with an actual selection input; and content reproduction means (118) for reading the determined content from the content storage means and reproducing the read content.

## Description

### Technical Field

The present invention relates to a content reproduction apparatus, a content reproduction method, a content reproduction system, and a computer program thereof that are capable of reproducing content.

### Background Art

In recent years, motion picture content can be viewed with a personal computer or various other content reproduction apparatuses due to the widespread use of DVDs (Digital Versatile Disks) and other optical disks. Since the optical disks permit random access, the beginning of a target piece of content can be directly located without fast forwarding or rewinding.

When, for instance, an optical disk containing a plurality of pieces of content is reproduced, such a random access capability makes it possible to first display the entire content stored on the optical disk in the form of thumbnails, then select a desired piece of content from the displayed thumbnails, and enjoy the desired piece of content.

The use of the random access capability also makes it possible to not only store motion picture content but also exercise an after-recording function. With the after-recording function, still pictures and audio, which are to be reproduced simultaneously with the motion picture content, can be recorded later. However, when data is recorded with the after-recording function, it is additionally stored on a recording medium. Therefore, no continuous storage region can be provided for such data. As a result, the additionally stored after-recording data is positioned physically apart from main content data. It means that a seek occurs when individual data is to be read. Consequently, a considerable amount of processing time is required before reproduction. Further, the larger the amount of reproduction information (e.g., after-recording data), the longer the time required for a data read, and thus the longer the processing time required for reproduction initiation.

To solve the above problem, a known technology disclosed, for instance, by Japanese Patent Laid-open No. 2002-158972 reduces the possibility of a seek occurrence by making advance arrangements so that an after-recording data region is positioned adjacent to main content data, which is to be reproduced simultaneously with the after-recording data. However, even when such a technology is used, the resulting operation is uncomfortable because the after-recording data stored in a separate region is reproduced and a reproduction image is actually displayed a certain period of time after the viewer's intention to start reproduction is indicated.

As described above, the reproduction of content containing an after-recording does not start until the processing time required for a seek and data read elapses. Therefore, the reproduction start time for content containing an after-recording differs from that for content without any after-recording. Consequently, the viewer is dissatisfied with the resulting operation, which is uncomfortable.

The present invention has been made to solve the above problem of content reproduction apparatuses in related art. It is an object of the present invention to provide a content reproduction apparatus, content reproduction method, content reproduction system, and computer program thereof, which are new, improved, and capable of reducing the processing time required between when the viewer's intention to start reproduction is indicated and when a reproduction image is actually displayed, and obliterating the reproduction start time difference between pieces of content.

### Disclosure of Invention

In solving the above problem, according to one aspect of the present invention, there is provided a content reproduction apparatus for reproducing a recording medium on which content is stored. The content reproduction apparatus includes: selection screen display means for displaying a selection screen from which a piece of reproduction content is to be selected; preread instruction generation means for detecting a identification state in which the selection of a specific piece of content from the selection screen is estimated, and generating a read instruction for reading the specific piece of content from the recording medium; content storage means for reading the specific piece of content from the recording medium in compliance with the read instruction and storing the read content; content determination means for detecting a selection input from the selection screen and determining the content to be reproduced; and content reproduction means for reading the content determined by the content determination means from the content storage means and reproducing the read content.

The selection screen display means may display the selection screen that contains thumbnails of selectable content images or a list of selectable pieces of content. The content storage means may be formed by a first-in, first-out (FIFO) semiconductor storage medium.

The present invention detects the status of selection means for selecting the content to be reproduced, that is, the status of a mouse cursor or title listing selector, notes the detected status to estimate the content to be reproduced, prereads the content to be reproduced, and loads the read content into the content storage means so that it can be reproduced immediately after it is actually selected. Further, the present invention recognizes the content that needs to be preread, and prereads such content only with a view toward avoiding unnecessary processes.

Since the present invention is configured as described above, it makes it possible to reduce the processing time required between when the viewer's intention to start reproduction is indicated and when a reproduction image is actually displayed, and obliterate the reproduction start time difference between pieces of content.

The aforementioned specific piece of content includes at least first data and second data. When the specific piece of content is reproduced, the first data and the second data may be simultaneously reproduced. The first data and the second data may be stored on the recording medium and positioned physically apart from each other.

If, for instance, the employed recording medium is a disk, the first and second data are positioned physically apart from each other when the first data is positioned on a predetermined track near an inner circumference while the second data is positioned on a predetermined track near an outer circumference. When a single disk head is used to read data from regions that are physically separated from each other as described above, the processing time for a seek and other data read operations is required.

The preread instruction generation means may detect an identification state in which the selection of a specific piece of content from the selection screen is estimated, and generate a read instruction for reading only the second data of the specific piece of content from the recording medium. The content storage means may read only the second data of the specific piece of content from the recording medium in compliance with the read instruction, and store the read second data.

Since the employed configuration is as described above, it is possible to preread only the second data, which requires the processing time for a read. Further, it is possible to save the bother of vainly prereading content of only the first data, which need not be preread, thereby reducing the power consumption.

Further, the first data may be motion picture data, and the second data may be after-recording data, which is to be reproduced simultaneously with the motion picture data. The motion picture data, which is the first data, may contain after-recording data that differs from the second data. The term "after-recording" denotes the act of adding a narration or other voice or sound effects to an image (video). The after-recording data also contains images, motion pictures, text, and other data that can be reproduced simultaneously with the main image.

At least the second data is after-recording data. An object is to preread only the after-recording data, which is positioned physically apart from motion picture data and included in a piece of content containing after-recording data that contains after-recording data that serves as the second data.

The content containing the above after-recording data requires the processing time for a seek and data read before the start of reproduction. Therefore, the reproduction start time for a piece of content that contains an after-recording is later than that for a piece of content that contains no after-recording. The employed configuration, which has been described above, saves the bother of vainly prereading content that contains no after-recording data.

An after-recording management file or other similar management file on the recording medium can be referenced to determine whether various pieces of content displayed in the selection screen contain after-recording data. When the aforementioned identification state is detected and a piece of content whose selection is estimated contains the referenced after-recording data, a preread process is performed.

The preread instruction generation means may generate a read instruction for all pieces of content containing after-recording data that is to be reproduced simultaneously with the specific piece of content. When such a configuration is employed, it is possible to perform a preread process without having to estimate a piece of content that the viewer wants to reproduce, thereby displaying a reproduction image instantaneously.

The recording medium may be an optical disk, a magnetic disk, a magnetooptical disk, a semiconductor memory, or a so-called flash memory based on a semiconductor memory. The recording medium may also be the one that makes it possible to add BGM or perform some other editing operations on the spot upon shooting without having to bring the recording medium to home or office for editing purposes.

The aforementioned identification state may be a state in which the specific piece of content is made selectable by the selection means. If, for instance, the selection screen contains thumbnails, the identification state is a state where the mouse cursor is positioned within or moved into a selection frame for the content to be reproduced. If, on the other hand, the selection screen includes a list, the identification state is a state where the screen indicates that the content to be reproduced is selected. Since the employed configuration is as described above, it is possible to detect the viewer's intention to start reproduction without delay and perform a preread process immediately.

The identification state may be a state where a predetermined period of time has elapsed while the aforementioned selection can be made. If, for instance, the selection screen contains thumbnails, the mouse cursor is positioned within the selection frame for the content to be reproduced, and it is detected that the mouse cursor has been positioned within the selection frame for a predetermined period of time. The predetermined period of time is variable depending on the intended purpose. For example, it can be set to one second. Further, the identification state may be a state where it is detected that the mouse cursor is stopped within the selection frame for a predetermined period of time.

The identification state may be a state where there is an increased possibility of selecting the specific piece of content. For example, the identification state may be a state where the selection means shifts in the direction of selecting the specific piece of content.

When, for instance, the selection screen contains thumbnails, the employed configuration, which has been described above, makes it possible to estimate the content to be reproduced from the shift of the mouse cursor that moves toward a content selection frame even before the mouse cursor reaches the content selection frame.

The identification state may also be a state where the shift of the selection means is stopped at a position at which the specific piece of content can be selected. The use of such a configuration makes it possible to prevent a preread process from being performed when the mouse cursor merely passes through the selection frame for the above content, and avoid the loss of time involved in leaving the mouse cursor in a content selection frame for a predetermined period of time to initiate a preread process.

The content reproduction apparatus may further include commercial power detection means for detecting that the content reproduction apparatus is operated by electronic supply from commercial power, and the preread instruction generation means may operate only a period during which electronic supply from commercial power is detected. The use of such a configuration makes it possible to restrict the preread process and reduce the power consumption in a situation where the content reproduction apparatus is driven by a battery or other power source than commercial power.

The content reproduction apparatus may further include instruction operation selection means for selecting ON or OFF for the operation of the preread instruction generation means, and the preread instruction generation means may operate only when ON is selected by the instruction operation selection means. The use of such a configuration allows the viewer to specify whether or not to perform a preread process and reduce the power consumption in a situation where the preread process need not be performed.

The reproduction start time difference between content containing the after-recording data and content containing no after-recording data may be reduced by delaying the reproduction start time for the content containing no after-recording data until it coincides with the reproduction start time for the content containing the after-recording data, that is, the content that is to be reproduced later than the other.

In solving the above problem, according to another aspect of the present invention, there is provided a computer program for enabling a computer to function as the content reproduction apparatus and a content reproduction method for exercising various functions of the content reproduction apparatus.

There is also provided a content reproduction system that functions as the content reproduction apparatus in a situation where the content reproduction apparatus is separated into a user terminal, which is used by a user, and a content server, which is connected to the user terminal via a communication network to supply one or two or more pieces of content to the user terminal.

The content server of the content reproduction system includes: selection screen display means for displaying a selection screen on the user terminal to prompt for selecting content to be reproduced; preread instruction generation means for detecting an identification state where the selection of a specific piece of content can be estimated from the selection screen and transmitting a read instruction for reading the specific piece of content to the user terminal; and content determination means for detecting a selection input from the selection screen and determining the content to be reproduced. The user terminal includes content storage means for reading the specific piece of content from the content server in compliance with the read instruction and storing the read content; and content reproduction means for reading the content determined by the content determination means from the content storage means and reproducing the read content.

As described above, the present invention can reduce the processing time required between when the viewer's intention to start reproduction is indicated and when a reproduction image is actually displayed by performing a "preread" process, that is, by estimating the content to be reproduced by the user and loading the content into the content storage means.

Further, the present invention allows the viewer to continuously enjoy smooth operations because the viewer no longer feels the reproduction start time difference between pieces of content. Such difference arises when, for instance, the content to be reproduced requires a predetermined period of time for a content read or contains and after-recording data, which is positioned physically apart from motion picture data.

### Brief Description of Drawings

Fig. 1 is a schematic block diagram illustrating a content reproduction apparatus according to an embodiment of the present invention.
Fig. 2 is an image diagram that shows an example of a selection screen.
Fig. 3 illustrates an estimation process that is performed in accordance with the position of a mouse cursor or the like.
Fig. 4 illustrates an estimation process that is performed in accordance with a shift of the mouse cursor or the like.
Fig. 5 illustrates an estimation process that is performed in accordance with another shift of the mouse cursor or the like.
Fig. 6 is a schematic diagram illustrating the recording format of a recording medium.
Fig. 7 shows the details of the recording format of a recording medium.
Fig. 8 is a block diagram that shows the flow of data in order to describe a recording medium reproduction process in the content reproduction apparatus.
Fig. 9 is a schematic diagram illustrating a recording format that contains separated regions.
Fig. 10 illustrates an after-recording management file, which is used to exercise after-recording management.
Fig. 11 is an image diagram that indicates whether there are separated regions for pieces of content displayed in the selection screen.
Fig. 12 is a flowchart illustrating a content reproduction method.
Fig. 13 is a schematic block diagram illustrating a content reproduction system.

### Best Mode for Carrying out the Invention

Preferred embodiments of the present invention will now be described in detail with reference to the accompanying drawings. In this document and in the accompanying drawings, elements having substantially the same functionality are assigned the same reference numerals and not repeatedly described.

The embodiments described herein detect the status of a mouse cursor or other selection means for selecting content to be reproduced, estimate the content to be reproduced from the detected status, and preread the content and load it into content storage means so that it can be reproduced upon actual selection. Further, the embodiments described herein recognize the content that needs to be preread, and preread only the recognized content to avoid performing unnecessary processes. A content reproduction apparatus for reproducing a recording medium on which one or two or more pieces of content are stored will be described below.

### [First embodiment: Content reproduction apparatus]

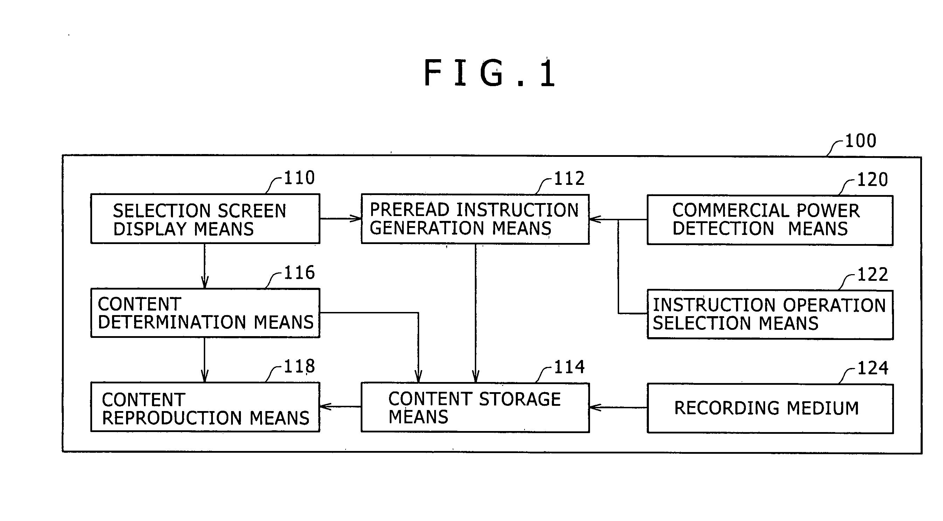

Fig. 1 is a schematic block diagram illustrating a content reproduction apparatus 100 according to a first embodiment of the present invention. The content reproduction apparatus 100 includes selection screen display means 110, preread instruction generation means 112, content storage means 114, content determination means 116, content reproduction means 118, commercial power detection means 120, and instruction operation selection means 122.

One or two or more pieces of content that is stored on a recording medium for reproduction by the content reproduction apparatus 100 contain at least first data. Some pieces of content contain second data as well. The first data and second data are simultaneously reproduced and positioned physically apart from each other. The first embodiment assumes that the first data is motion picture data, and that the second data is after-recording data, which is to be reproduced simultaneously with the motion picture data.

The selection screen display means 110 displays a selection screen on a monitor, LCD (Liquid Crystal Display), or other display means so that the content to be reproduced by the content reproduction apparatus 100 can be selected from a plurality of pieces of content. The selection screen may display thumbnails, which are the images (still or motion pictures) of selectable pieces of content, or a list of selectable pieces of content.

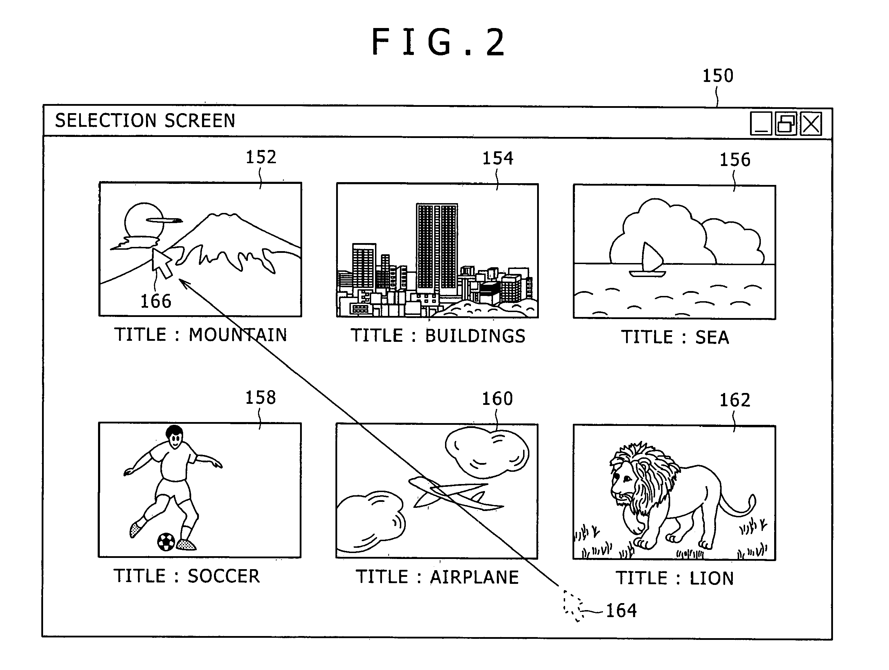

Fig. 2 is an image diagram that shows an example of the selection screen 150. The selection screen 150 that contains thumbnails as indicated in Fig. 2 displays a plurality of selectable pieces of content 152, 154, 156, 158, 160, and 162.

The preread instruction generation means 112 detects an identification state where the selection of a specific piece of content from the selection screen 150 can be estimated, and generates a read instruction for loading the specific piece of content from the recording medium 124 to the content storage means 114. For example, the preread instruction generation means 112 detects an identification state in which the mouse cursor 164 is moved in the selection screen 150 shown in Fig. 2 and stopped at a position 166 at which content 152 can be selected (by clicking the left mouse button). In this instance, it goes without saying that content 152 is likely to be selected. The preread instruction generation means 112 may detect an identification state in which the selection of a specific piece of content is estimated from the selection screen 150 and generate a read instruction for reading from the recording medium 124 only the after-recording data, which is included in the specific piece of content and is to be reproduced simultaneously with motion picture data.

This identification state may be a state where the mouse cursor or other selection means is positioned so that a specific piece of content is selectable, that is_, the mouse cursor is positioned within the frame of content 152, or a state where a predetermined period of time has elapsed while the mouse cursor is positioned at a predefined point that permits content selection. The predetermined period of time may be 0.5 sec, 1 sec, or 1.5 sec and variously adjusted depending on the intended purpose. The count of the predetermined period of time may reset when the mouse cursor moves.

The identification state may be a state where the selection means moves in the direction of selecting the specific piece of content, thereby increasing the possibility of selecting the specific piece of content. For example, the apparatus detects that the mouse cursor 164 moves toward content 152 in the selection screen 150 (eventually moves to position 166), determines the direction and speed of such mouse cursor movement, and estimates that content 152, which is entitled "Mountain," is likely to be selected. As described above, the content to be reproduced can be estimated before the mouse cursor reaches the selection frame for content 152.

In compliance with a read instruction, which is issued, for instance, by the preread instruction generation means 112, the content storage means 114 reads a specific piece of content from the recording medium 124 and stores it. The content storage means 114 stores data that corresponds to a predetermined leading period portion of the content whose selection is predicted from the selection screen 150. If the received read instruction dictates that only the after-recording data should be read from the recording medium 124, the content storage means 114 may read only the after-recording data of a specific piece of content from the recording medium 124 and store it. The content storage means 114 may store pieces of content that are likely to be selected prior to those that are less likely to be selected. The read after-recording data of content may be changed each time the content estimated by the preread instruction generation means 112 is changed. The after-recording data may be erased when they become unnecessary.

When the user actually selects a specific piece of content from the selection screen 150, the content determination means 116 detects the associated selection input and determines the content to be reproduced. If the read instruction is not issued by the preread instruction generation means 112, that is, if no content is read by the content storage means 114, the content determination means 116 generates the read instruction in place of the preread instruction generation means 112.

The content reproduction means 118 confirms that the after-recording data of content or other data corresponding to a predetermined leading period portion of the content determined by the content determination means 116 is already stored in the content storage means 114, reads the after-recording data from the content storage means 114, and causes the monitor, LCD, or other display means to reproduce the read after-recording data.

The commercial power detection means 120 detects that the content reproduction apparatus operates on commercial power. The detection signal generated by the commercial power detection means 120 is used to determine whether or not to operate the preread instruction generation means 112. If the content reproduction apparatus 100 is driven by a battery or other power source than commercial power in a situation where the employed configuration is as described above, the preread process can be restricted to reduce the power consumption.

The instruction operation selection means 122 selects ON or OFF for the operation of the preread instruction generation means. The preread instruction generation means 112 may operate while ON is selected by the instruction operation selection means 122. The use of such a configuration allows the viewer to specify whether or not to perform a preread process and reduce the power consumption in a situation where the preread process need not be performed.

A computer program that implements the above functionality of the content reproduction apparatus 100 is also provided.

When the configuration described above is employed, the present embodiment operates as described below. First of all, the selection screen display means 110 opens the selection screen 150 and waits for the user's selection input. When the user moves the mouse cursor within the selection screen 150, the preread instruction generation means 112 detects an identification state due to mouse cursor movement, and estimates a specific piece of content that the user is likely to choose from selectable pieces of content within the selection screen 150. If, for instance, the mouse cursor 164 is moved to content 152, the preread instruction generation means 112 predicts that content 152 will be selected, and generates a read instruction.

Upon receipt of the read instruction, the content storage means 114 reads the data of content 152 from the recording medium 124. When content 152 is actually selected, that is, when the user clicks the left mouse button to select content 152 or otherwise makes such a selection, the content determination means 116 instructs the content reproduction means 118 to reproduce content 152. The content reproduction means 118 causes the monitor to reproduce content 152, which is already loaded into the content storage means 114.

The selection screen may contain thumbnails as described earlier or may be a menu screen that contains a list of titles or the like and allows the user to shift his/her selection and finalize his/her selection by pressing the return key.

An identification state in which the selection of a specific piece of content, which is described above, can be predicted will now be described in detail. The identification state can be roughly classified into two types. In one identification state, the content selection is estimated in accordance with the current position of the mouse cursor or the like. In another identification state, the content selection is estimated in accordance with the movement of the mouse cursor or the like.

In the former case, the preread instruction generation means 112 detects, for instance, a state where the mouse cursor or other selection means is positioned so that the specific piece of content can be selected.

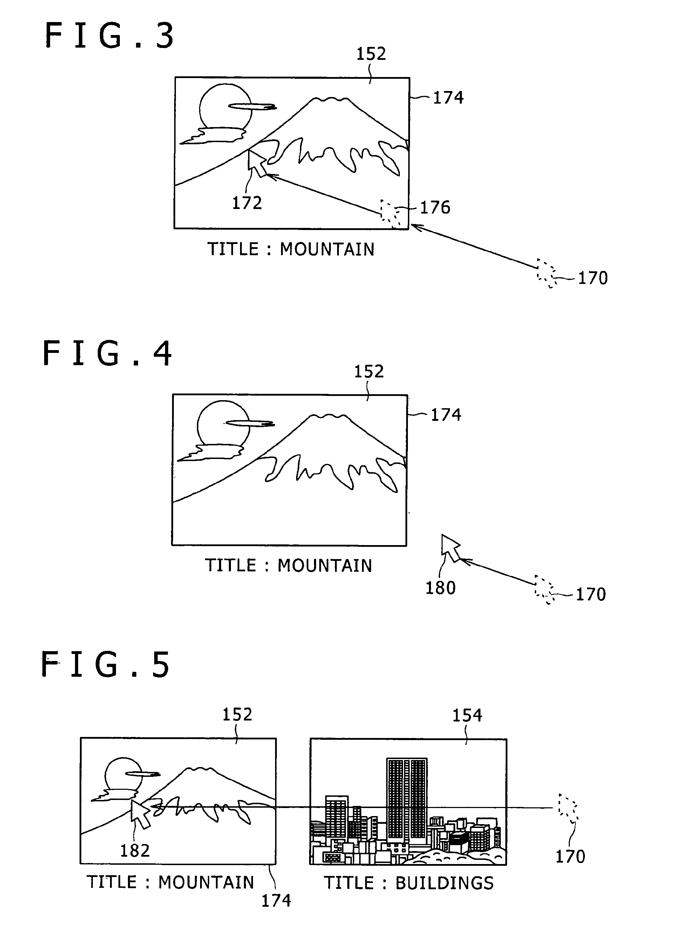

Fig. 3 illustrates an estimation process that is performed in accordance with the position of the mouse cursor or the like. A situation where the user views content 152, which is shown in Fig. 2, will now be described. The mouse cursor 170 eventually moves to position 172 due to user input and selects content 152. The preread instruction generation means 112 detects position 176 of the mouse cursor, which is moved into the frame 174 for content 152, and generates a read instruction, that is, starts a preread process for content 152. The user clicks the mouse at a final cursor position 172 to instruct that content 152 be reproduced. In this instance, the data of content 152 is already loaded into the content storage means 114 when the mouse cursor is placed at position 176. Therefore, the user can view content 152 immediately.

The preread process according to the present embodiment may be performed only when the cursor 170 is left within the frame 174 for content 152, at position 176, or at position 172 for a predetermined period of time. For example, the predetermined period of time may be one second. In this instance, the cursor 170 may move or stay put as far as it is positioned within the frame 174 for the predetermined period of time. When the cursor 170 moves out of the frame 174 for content 152, the staying time count for content 152 resets.

The preread process may be performed only when the cursor 170 remains in a fixed position within the frame 174 for content 152 for a predetermined period of time.

In the latter case of the identification state, on the other hand, the preread instruction generation means 112 detects the movement of the cursor or other selection means. This case represents a state where the selection means moves in the direction of selecting a specific piece of content, thereby increasing the possibility of content selection.

Fig. 4 illustrates an estimation process that is performed in accordance with a shift of the cursor or the like. A situation where the user views content 152 will now be described. Upon user input, the cursor 170 moves toward content 152, which the user wants to reproduce. The position 180 of the cursor implies that the cursor is moving toward content 152 but has not selected content 152. However, the preread instruction generation means 112 detects the movement toward content 152, and generates a read instruction, that is, starts a preread process for content 152. The user clicks the mouse within the frame 174 for content 152 to instruct that content 152 should be reproduced. In this instance, the data of content 152 is already loaded into the data storage means 114 when the cursor is placed at position 180. Therefore, the user can view content 152 immediately.

The use of the configuration described above makes it possible to estimate the content to be reproduced from the mouse cursor movement toward a specific content selection frame even when the mouse cursor has not reached the content selection frame.

Fig. 5 illustrates an estimation process that is performed in accordance with another shift of the cursor or the like. Upon user input, the cursor 170 moves toward content 152, which is shown in Fig. 2 and is to be reproduced. The preread instruction generation means 112 detects that the cursor movement is stopped at position 182, and generates a read instruction, that is, starts a preread process for content 152. The user then clicks the mouse within the frame 174 for content 152 to instruct that content 152 should be reproduced. In this instance, the cursor 170 has passed through content 154. However, the preread instruction generation means 112 detects the stop of the cursor 170. Therefore, the preread instruction generation means 112 does not generate a preread instruction for content 154. Consequently, it is possible to prevent the preread process from responding excessively to the movement of the cursor 170, thereby reducing the power consumption.

If the above preread process is performed, the content storage means temporarily stores content that might not be reproduced. Therefore, the resulting power consumption may be unexpectedly large depending on the content use by the user. However, the recording medium according to the present embodiment contains, as described later, content that needs to be preread and content that does not need to be preread. It is possible to choose to perform a preread process or skip a preread process by recognizing, in advance, the necessity for the preread process. In other words, the power consumption can be reduced by performing a preread process only for content that needs to be preread.

The aforementioned identification state may be a state that is derived from the result of learning a record of the user's content selection patterns.

The preread instruction generation means 112 issues a read instruction for after-recording data related to only the content whose after-recording data is positioned on a track physically apart from motion picture data or other content that needs to be preread. Therefore, the content determination means 116 issues a read instruction for content that does not need to be preread.

Whether or not a preread process is required as described above may be determined by checking whether the seek time required for a content read is longer than a predetermined period of time.

Content that needs to be preread as described above may be stored on the recording medium 124 in such a manner that a region where data is contiguously stored in the order of reproduction is physically separated from a region where after-recording data is stored.

A second embodiment of the present invention will be described in detail below to promote a better understanding of the content reproduction apparatus described above.

### [Second embodiment: Content reproduction apparatus]

First of all, the recording medium suitable for use with the content reproduction apparatus according to the second embodiment will now be described.

When motion picture (video) data, audio data, or other content data is to be stored on a recording medium, image data and text data can be added to the stored content data by means of after-recording. In this instance, the main content data is contiguously stored on the recording medium as main data, whereas the after-recording data is stored, as auxiliary data, on the outermost track of the disk or in an auxiliary region that is positioned physically apart from the main data region.

When the aforementioned recording medium in related art is used, after-recorded data is stored in a region that is irrelevant to the main data. When content is to be actually reproduced, however, the after-recorded auxiliary data is reproduced simultaneously with the main data. Therefore, a seek frequently occurs to read both the main data and auxiliary data while accessing different regions. Consequently, it takes a considerable amount of time to read data.

The recording medium, which is described below, is offered to solve the above problem. This recording medium can reduce the frequency of a seek operation by employing a recording format that alternately stores a region for after-recording data and a region for main data, which is to be reproduced simultaneously with the after-recording data.

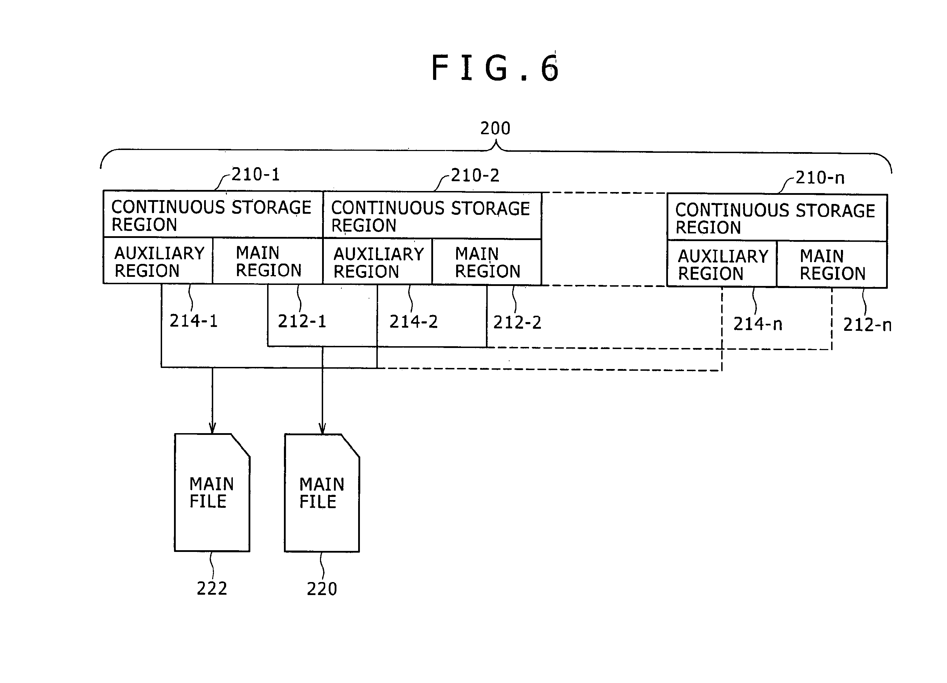

Fig. 6 is a schematic diagram illustrating a recording format of the recording medium 124. It is assumed that content data 200, which is arranged in the recording format shown in Fig. 6, is stored from left to right in Fig. 6, that is, stored along storage regions on the disk (concentrically).

The content data 200 is composed of a plurality of continuous storage regions 210, and divided into the main data and auxiliary data, which have predetermined data lengths. The regions storing the divided main data are referred to as main regions 212. The regions storing the divided auxiliary data are referred to as auxiliary regions 214. The main regions 212 store, for instance, 10 seconds of main images and musical content data. The auxiliary regions 214 store, for instance, 320 kbytes of additional data, which is to be reproduced simultaneously with the main content data. The auxiliary regions 214 may be stored immediately before the main regions 212 as indicated in Fig. 6 or stored immediately after the main regions 212 depending on the use. In either case, the main data and auxiliary data of the content data 200 are respectively in a main file 220 and an auxiliary file 222, which have predetermined lengths. The main data and auxiliary data are alternately positioned on the recording medium 124.

The integers (-1 to -n) attached to the reference numerals of both regions represent the order of reproduction. As far as such an order of reproduction is maintained, other data regions, which are irrelevant to the content data 200, may exist between the continuous storage regions 210. Therefore, even when the content data 200 is to be written onto the recording medium 124 on which the other data is already stored, the continuous storage regions 210 can be stored separately as far as each continuous storage region is ensured.

When the content data 200 is to be stored on the recording medium 124, a search is conducted to check for an unoccupied region that is larger than a set of the continuous storage regions 210. The main regions 212 and auxiliary regions 214 are placed within the unoccupied region in such a manner that the main regions 212 and auxiliary regions 214 are adjacent to each other. As mentioned earlier, the continuous storage regions 210 (210-1 to 210-n) are not always positioned in a continuous region of the recording medium 124. Any positional relationship is allowed to exist among the continuous storage regions 210-1 to 210-n.

The data and files related to the content data 200 that is recorded on the recording medium 124 during a recording process, that is, during a process performed between the start and end of reproduction of a motion picture or other content are referred to as one recording unit.

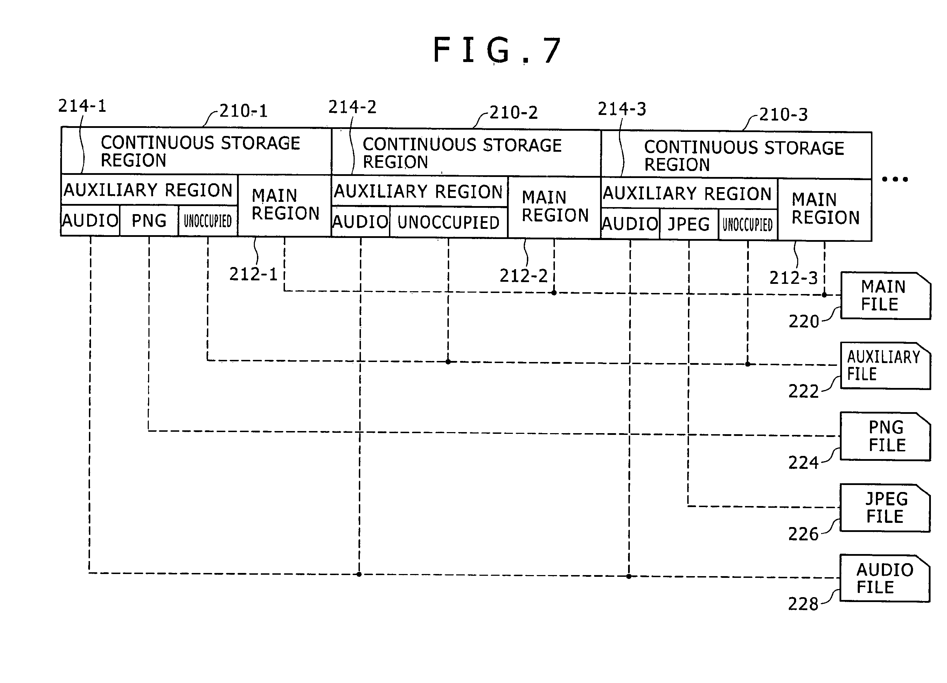

Fig. 7 shows the details of the recording format of the recording medium 124. For example, one recording unit contains a main file 220, an auxiliary file 222, a PNG (Portable Network Graphics) file 224, a JPEG (Joint Photographic Experts Group) file 226, and an audio file 228.

The main regions 212-1 to 212-n within one recording unit are managed as a main file 220, which is a logical file. More specifically, a unique track ID is first assigned to the main file 220. Further, the track ID of the main file 220 to which the main regions 212 belong, the start address on the recording medium 124, the data amount, and other information about the main regions 212 are stored on the recording medium 124 as file management information. Therefore, referencing the file management information on the recording medium 124 makes it possible to determine the positions and data amounts of all the main data contained in the main file 220, that is, the positions and data amounts of the main regions 212 of the content data 200 on the recording medium 124, which are recorded in one recording unit.

As is the case with the main regions 212, the unoccupied regions of the auxiliary regions 214-1 to 214-n within one recording unit are managed as an auxiliary file 222, which is a logical file. More specifically, the track ID of the auxiliary file 222, the start addresses of the unoccupied regions on the recording medium 124, the sizes of the unoccupied regions, and other information about the auxiliary regions 214 are recorded on the recording medium 124 as file management information as is the case with the main regions 212. Therefore, referencing the file management information on the recording medium 124 makes it possible to determine the positions and sizes of the auxiliary regions 214 on the recording medium 124, which relate to all the unoccupied regions contained in the auxiliary file 222.

As is the case with the unoccupied regions of the auxiliary regions 214-1 to 214-n, a unique track ID is assigned to the PNG file 224, JPEG file 226, and audio file 228 contained in the auxiliary regions, and the size and other relevant information are recorded on the recording medium 124 as the file management information. Therefore, referencing the file management information on the recording medium 124 makes it possible to determine the positions and amounts of various data contained in the files on the recording medium 124.

As indicated in Fig. 7, the auxiliary regions 214 store various content data, including PNG data (PNG file 224), JPEG data (JPEG file 226), and audio data (audio file 228) related to the main regions 212. The data stored in the auxiliary regions 214 are reproduced in synchronism with the main data in the main regions 212. When, for instance, a narration or sound effects is after-recorded in addition to the content data 200 stored on the recording medium 124, audio data is stored in the auxiliary regions 214, which are positioned adjacent to the main regions 212 of the content data 200. If after-recorded data belongs to a plurality of main regions 212, it is divided and stored in the auxiliary regions 214 for the main regions 212 containing the associated scenes.

Similarly, when, for instance, animated video (e.g., PNG data) or still picture (e.g., JPEG data) is to be superposed over the video provided by the main file 220 for display purposes, the animated video or still picture is stored in the auxiliary regions 214, which synchronize with the main regions 212.

As described above, the content data 200 containing after-recording data is stored on the recording medium 124 in consideration for read efficiency enhancement. Reproduction of the recording medium 124 described above will be described in detail below.

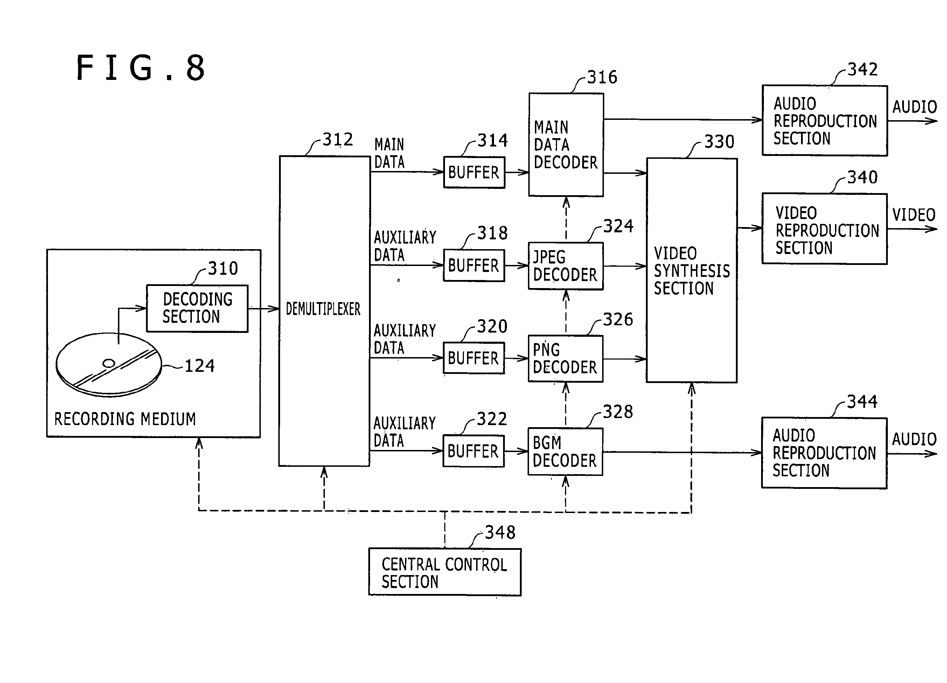

Fig. 8 is a block diagram that shows the flow of data in order to describe a recording medium reproduction process in the content reproduction apparatus 100. The recording medium 124 indicated in this figure stores after-recorded auxiliary data as well. The data stored on an optical disk, which serves as the recording medium 124, is decoded by a decoding section 310. If the data to be decoded is in error, it is corrected.

A demultiplexer (DEMUX) 312 separates the decoded data into main data and auxiliary data. For example, MPEG2-PS (Motion Picture Experts Group-Program Stream) is stored as the main data, and after-recording information, such as JPEG, PNG, and BGM (Background Music) data, is stored as the auxiliary data.

Each data is stored in a buffer, which serves as the content storage means 114 shown in Fig. 1, and forwarded to a decoder. More specifically, the main data is transmitted to a main data decoder 316 via a buffer 314, and the auxiliary data are respectively transmitted to a JPEG decoder 324, a PNG decoder 326, and a BGM decoder 328 via buffers 318, 320, 322. Subsequently, a video synthesis section 330 combines the JPEG, PNG, and other video data with the MPEG2-PS video data. The video data combined in this manner appears on a video display section 340. The MPEG2-PS audio data is output to an audio reproduction section 342, and BGM is output to another audio reproduction section 344 as audio independent of the MPEG2-PS audio data. All the above-mentioned processing sections are managed and controlled by a central control section 348, which includes a central processing unit (CPU).

The data after-recorded on the recording medium 124 is usually stored in the auxiliary regions 214 shown in Fig. 6. The after-recorded data and the main data, which is to be reproduced simultaneously with the after-recording data, are alternately stored (interleaved) to reduce the frequency of a seek operation for effective region use and data read speed enhancement.

The -example in which the content data 200 is stored only in the main regions 212 and auxiliary regions 214 as described above is expressed by the format shown in Fig. 6, and continuous storage regions 210-1, 210-2, ... 210-n are reproduced in order named. Here, the content data 200 is recalled in the unit of a continuous storage unit 210 so that the main data and auxiliary data can be simultaneously read. Therefore, no unnecessary seek occurs in the drive. It means that smooth reproduction is continuously performed.

However, the auxiliary regions 214 are limited (e.g., 320 kbytes). Therefore, if a predetermined data amount is exceeded by the after-recording data, excess data needs to be stored in another region. Consequently, the regions that store after-recording data are the auxiliary regions, which are positioned together with the main data in an interleaving manner, and a separate region, which is separate from the auxiliary regions. For example, the separate region may be of variable length and positioned in the outermost track of an optical disk.

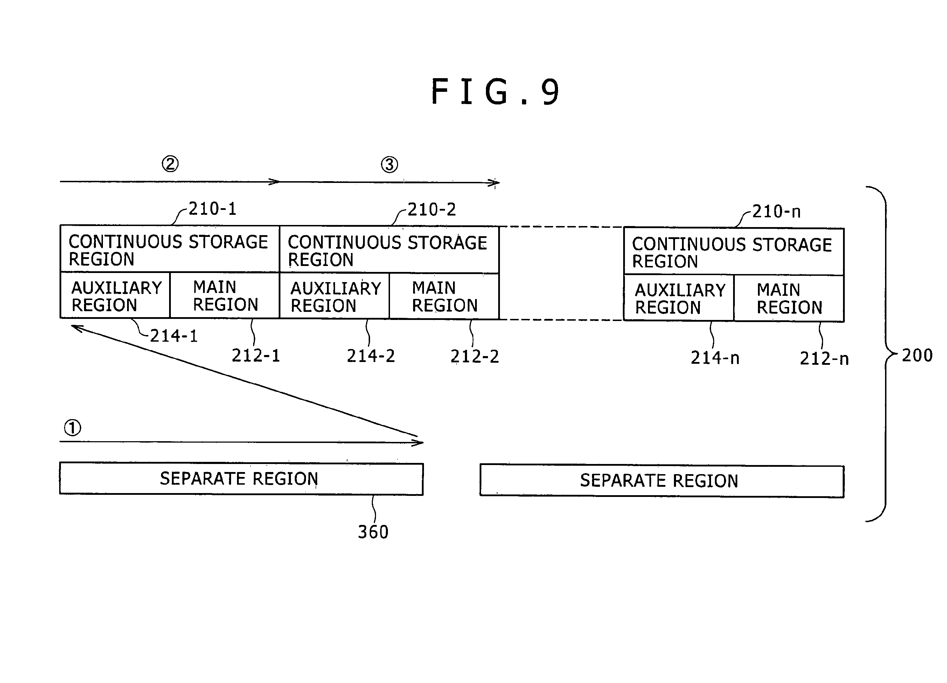

Fig. 9 is a schematic diagram illustrating a recording format that contains separate regions. When the content data 200 is expressed by the recording format shown in Fig. 9, the after-recording data is stored in the separate regions 360 as well. The after-recording data may be stored in the auxiliary regions 214 or in the separate regions 360 depending on the capacities. To provide uninterrupted, seamless, real-time reproduction in which data is reproduced while it is being read, the separate regions 360 store at least 100 seconds of continuous data.

In this instance, the content reproduction apparatus 100 first reads the after-recording data stored in a separate region 360 (see arrow 1 in Fig. 9) and then starts reading the continuous storage regions 210 (see arrows 2 and 3 in Fig. 9). Since the separate region 360 is positioned physically apart from the continuous storage regions 210, the drive performs a seek operation when an attempt is made to read the separate region 360. The drive performs a seek operation again when an attempt is subsequently made to read the continuous storage regions 210. As a result, the access time for reproduction of the content data 200 is longer than the access time for reproduction of the content data 200 that includes only the main regions 212 and auxiliary regions 214.

Therefore, when there is after-recording data and the content stored in the separate region 360 is reproduced, a considerable amount of time is required between when a reproduction start trigger is received to start decoding and when a reproduction image is presented to the user. Consequently, the start time for the content stored on the same recording medium 124 varies with the composition of the content.

The preread process according to the present embodiment is performed for obliterating the reproduction start time difference between pieces of content. The preread process is performed for only pieces of content that need to be preread to reduce the power consumption by promoting efficiency of the processing, and pieces of content that do not need to be preread are reproduced normally. The execution of the preread process is not limited to the above. The preread process may be performed in various other manners.

In the present embodiment, a check is performed first to determine whether one or two or more pieces of content stored on the recording medium 124 need to be preread.

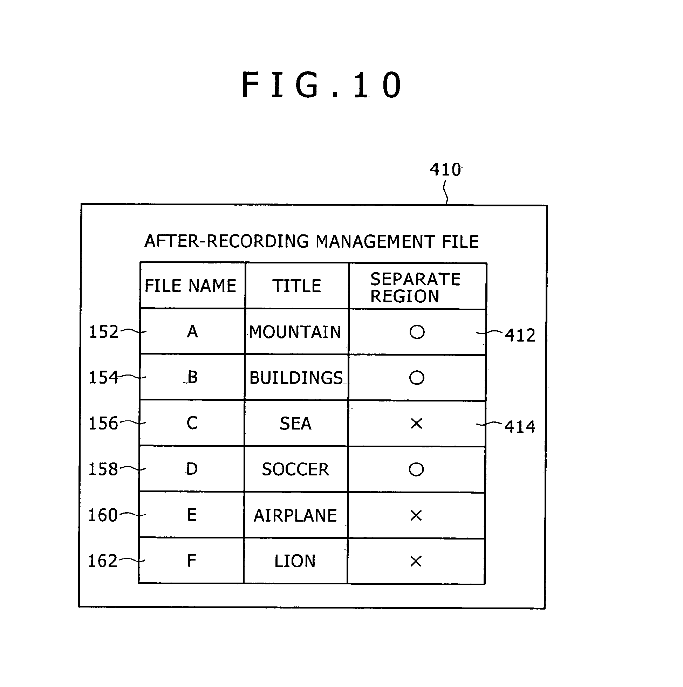

Fig. 10 illustrates an after-recording management file 410, which is used to exercise after-recording management. The after-recording management file 410 stores information that indicates whether a separate region 360 stores any after-recording data that relates to the pieces of content stored on the recording medium 124. For example, content 152 whose file name in the after-recording management file 410 is A is titled "Mountain," and has after-recording data in a separate region 360 (412). Content 156 whose file name is C is titled "Sea," and has no after-recording data in a separate region 360 (414). It means that the after-recording file for content 156 is stored in the auxiliary regions 214. The above separate region 360 may be a separate region 360 that is referenced particularly when content reproduction begins.

When the above after-recording management file 410 is referenced, it is possible to determine whether a preread operation needs to be performed for various pieces of content. The preread instruction generation means 112 shown in Fig. 1 then extracts content that requires a predetermined period of time between when a read instruction is issued and when the content is read, that is, content whose after-recording data is stored in the separate region 360, and generates a read instruction only when the selection of the extracted content is predicted.

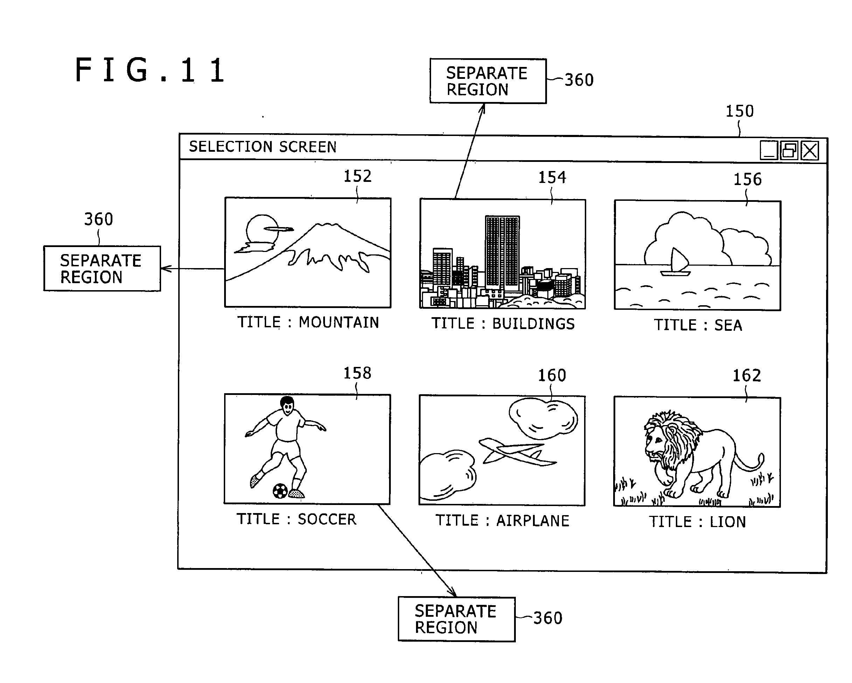

Fig. 11 is an image diagram that indicates whether there are separated regions 360 for pieces of content displayed in the selection screen 150. In the example shown in Fig. 11, content 152 whose file name is A as indicated in Fig. 10, content 154 whose file name is B, and content 158 whose file name is D are targeted as content that requires a predetermined period of time between when a read instruction is issued and the content is read.

The user moves the cursor or the like within the selection screen 150 to select content that the user wants to view. The preread instruction generation means 112 detects the movement of the cursor or the like and performs a preread process. When the user subsequently selects a desired piece of content (the piece of content the selection of which has been predicted), it is possible to immediately decode the data without reading it from the recording medium 124 again, and display a reproduction image because after-recording data is already cached (preread) by the buffer, which serves as the content storage means 114 shown in Fig. 1.

### [Third embodiment: Content reproduction method]

A content reproduction method for reproducing a recording medium on which one or two or more pieces of content are stored will be described below.

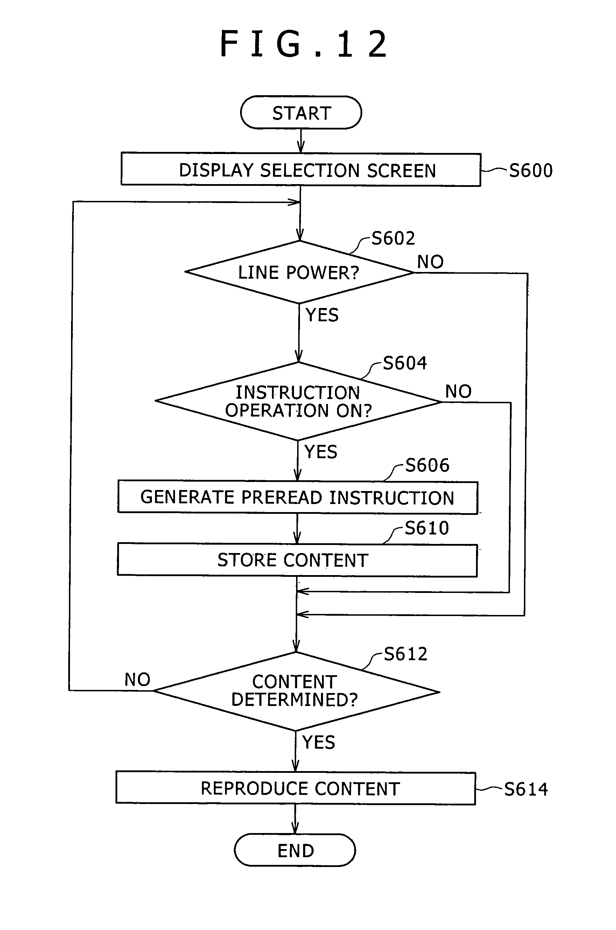

Fig. 12 is a flowchart illustrating the content reproduction method.

In the content reproduction method, step S600 is performed first to display a selection screen for prompting the viewer to select content that the viewer wants to reproduce. Step S602 is then performed to detect whether power supply from commercial power is received for content reproduction purposes. Step S604 is further performed to detect whether the instruction operation is turned ON or OFF by the user, that is, to detect whether the preread process is to be performed. The preread process is performed only when power supply from commercial power is detected while the instruction operation is turned ON.

When the preread process begins as described above, the content that the user is likely to select is preread until the user decides on the content to be reproduced. First of all, step S606 is performed to detect an identification state in which the selection of a specific piece of content is estimated from the selection screen, and generate a read instruction for reading the after-recording data for the specific piece of content from the recording medium. Step S610 is then performed to read only the after-recording data for the specific piece of content from the recording medium in compliance with the read instruction and store the read data in the content storage means. The after-recording data stored in the content storage means in a manner described above is placed in a reproduction standby state so that it can be reproduced immediately after the associated content is selected by the user.

When the user actually selects the content to be reproduced, step S612 is performed to detect a selection input from the selection screen and determine the content to be reproduced. Step S614 is then performed to read the content determined by the content determination process (step S612) from the content storage means and reproduce the read content.

The use of the above content reproduction method makes it possible to reduce the processing time required between when the viewer's intention to start reproduction is indicated and when a reproduction image is actually displayed, and obliterate the reproduction start time difference between pieces of content.

### [Fourth embodiment: Content reproduction system]

A content reproduction system, which is obtained when the content reproduction apparatus 100 is functionally divided, will be described below.

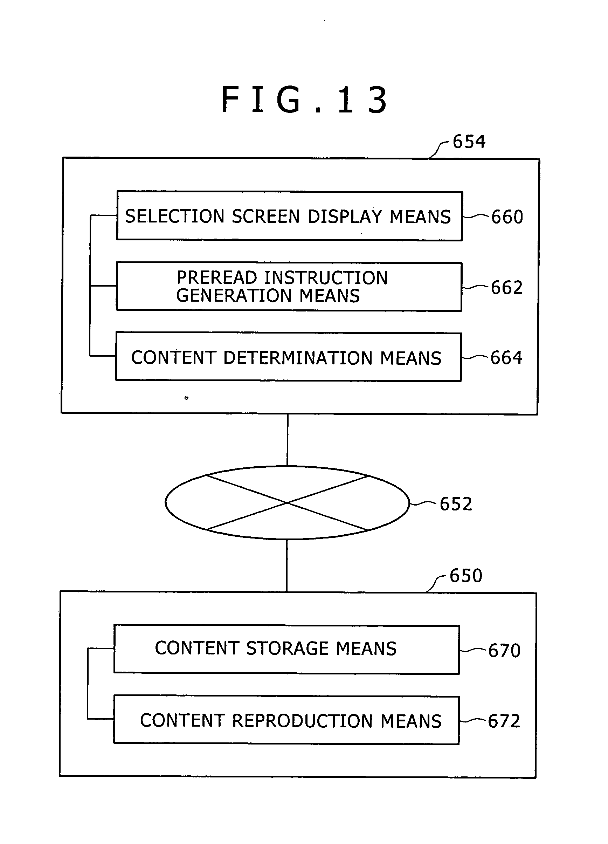

Fig. 13 is a schematic block diagram illustrating the content reproduction system. The content reproduction system includes a user terminal 650, which is used by the user, and a content server 654, which is connected to the user terminal 650 via a communication network 652 to supply one or two or more pieces of content to the user terminal 650.

The content server 654 includes selection screen display means 660, preread instruction generation means 662, and content determination means 664.

The user terminal 650 includes content storage means 670 and content reproduction means 672.

The content server 654 and user terminal 650 are not described herein because they exercise substantially the same functions as the selection screen display means 110, preread instruction generation means 112, content storage means 114, content determination means 116, and content reproduction means 118, which are already described as the elements of the first embodiment, except that they exchange data and commands via the communication network 652.

As described above, the content reproduction apparatus 100 can be functionally separated into a plurality of devices. The content reproduction system according to the present embodiment can also be applied to a content distribution service that uses the above-mentioned configuration to distribute various pieces of content.

While various preferred embodiments of the present invention have been described above with reference to the accompanying drawings, it should be understood that they have been presented by way of example and not limitation. It will be understood by those skilled in the relevant arts that various changes and modifications can be made therein without departing from the spirit and scope of the invention. Thus, the present invention should not be limited by any of the above-described exemplary embodiments but should be defined only in accordance with the spirit and scope of the appended claims.

For example, the embodiments described above assume that the selection screen is incorporated in the content reproduction apparatus. However, the present invention is not limited to the use of such a configuration. Alternatively, the content reproduction apparatus may be separated into a display section and a control section. Further, the embodiments described above assume that the selection screen on the display shows thumbnails. Alternatively, however, an LCD may be attached to the content reproduction apparatus and used to display a list of various pieces of content.

Furthermore, the embodiments described above assume that whether or not the preread process should be performed is determined by checking whether after-recording data exists or by checking the length of seek time for a content read. However, the embodiments described above can also be applied to various situations where the reproduction start time varies with recording medium properties.

### Industrial Applicability

The present invention can be applied to a content reproduction apparatus that is capable of reproducing content, a content reproduction method, a content reproduction system, and a computer program for content reproduction.

## Claims

1. A content reproduction apparatus for reproducing a recording medium on which one or two or more pieces of content are stored, the content reproduction apparatus comprising:
selection screen display means for displaying a selection screen from which the content to be reproduced is to be selected;
preread instruction generation means for detecting an identification state in which the selection of a specific piece of content from the selection screen is estimated, and generating a read instruction for reading the specific piece of content from the recording medium;
content storage means for reading the specific piece of content from the recording medium in compliance with the read instruction and storing the read content;
content determination means for detecting a selection input from the selection screen and determining the content to be reproduced; and
content reproduction means for reading the content determined by the content determination means from the content storage means and reproducing the read content.

2. The content reproduction apparatus according to claim 1, wherein the specific piece of content includes at least first data and second data, and
when the specific piece of content is reproduced, the first data and the second data are simultaneously reproduced.

3. The content reproduction apparatus according to claim 2, wherein the first data and the second data are stored on the recording medium and positioned physically apart from each other.

4. The content reproduction apparatus according to claim 3, wherein the preread instruction generation means detects an identification state in which the selection of a specific piece of content from the selection screen is estimated, and generates a read instruction for reading only the second data of the specific piece of content from the recording medium, and
the content storage means reads only the second data of the specific piece of content from the recording medium in compliance with the read instruction and stores the read second data.

5. The content reproduction apparatus according to claim 4, wherein the first data is motion picture data, and the second data is after-recording data, which is to be reproduced simultaneously with the motion picture data.

6. The content reproduction apparatus according to claim 1, wherein the identification state is a state where the specific piece of content is made selectable by selection means.

7. The content reproduction apparatus according to claim 6, wherein the identification state is a state where a predetermined period of time has elapsed while the specific piece of content is selectable.

8. The content reproduction apparatus according to claim 1, wherein the selection screen display means displays the selection screen containing thumbnails that are the images of selectable pieces of content.

9. A computer program for reproducing a recording medium on which one or two or more pieces of content are stored, the computer program enabling a computer to function as:
selection screen display means for displaying a selection screen from which the content to be reproduced is to be selected;
preread instruction generation means for detecting an identification state in which the selection of a specific piece of content from the selection screen is estimated, and generating a read instruction for reading the specific piece of content from the recording medium;
content storage means for reading the specific piece of content from the recording medium in compliance with the read instruction and storing the read content;
content determination means for detecting a selection input from the selection screen and determining the content to be reproduced; and
content reproduction means for reading the content determined by the content determination means from the content storage means and reproducing the read content.

10. A content reproduction method for reproducing a recording medium on which one or two or more pieces of content are stored, the content reproduction method comprising:
a selection screen display step of displaying a selection screen from which the content to be reproduced is to be selected;
a preread instruction generation step of detecting an identification state in which the selection of a specific piece of content from the selection screen is estimated, and generating a read instruction for reading the specific piece of content from the recording medium;
a content storage step of reading the specific piece of content from the recording medium in compliance with the read instruction and storing the read content in content storage means;
a content determination step of detecting a selection input from the selection screen and determining the content to be reproduced; and
a content reproduction step of reading the content determined by the content determination step from the content storage means and reproducing the read content.

11. The content reproduction method according to claim 10, wherein the specific piece of content includes at least first data and second data,
when the specific piece of content is reproduced, the first data and the second data are simultaneously reproduced,
the first data and the second data are stored on the recording medium and positioned physically apart from each other,
the preread instruction generation step detects an identification state in which the selection of a specific piece of content from the selection screen is estimated and generates a read instruction for reading only the second data of the specific piece of content from the recording medium, and
the content storage step reads only the second data of the specific piece of content from the recording medium in compliance with the read instruction and stores the read second data.

12. The content reproduction method according to claim 11, wherein the first data is motion picture data, and the second data is after-recording data, which is to be reproduced simultaneously with the motion picture data.

13. The content reproduction method according to claim 10, wherein the identification state is a state where the specific piece of content is made selectable by selection means.

14. The content reproduction method according to claim 13, wherein the identification state is a state where a predetermined period of time has elapsed while the specific piece of content is selectable.

15. A content reproduction system comprising:
a user terminal, which is used by a user; and
a content server, which is connected to the user terminal via a communication network to supply one or two or more pieces of content to the user terminal;
wherein the content server includes
selection screen display means for displaying a selection screen from which the content to be reproduced is to be selected,
preread instruction generation means for detecting an identification state in which the selection of a specific piece of content from the selection screen is estimated, and transmitting a read instruction for reading the specific piece of content to the user terminal, and
content determination means for detecting a selection input from the selection screen and determining the content to be reproduced; and
the user terminal includes
content storage means for reading the specific piece of content from the content server in compliance with the read instruction and storing the read content, and
content reproduction means for reading the content determined by the content determination means from the content storage means and reproducing the read content.

16. The content reproduction system according to claim 15, wherein the specific piece of content includes at least first data and second data, and
when the specific piece of content is reproduced, the first data and the second data are simultaneously reproduced.

17. The content reproduction system according to claim 16, wherein the first data and the second data are stored on the recording medium and positioned physically apart from each other.

18. The content reproduction system according to claim 17, wherein the preread instruction generation means detects an identification state in which the selection of a specific piece of content from the selection screen is estimated, and generates a read instruction for reading only the second data of the specific piece of content from the recording medium, and
the content storage means reads only the second data of the specific piece of content from the recording medium in compliance with the read instruction and stores the read second data.

19. The content reproduction system according to claim 18, wherein the first data is motion picture data, and the second data is after-recording data, which is to be reproduced simultaneously with the motion picture data.
